# EUROPEAN PATENT SPECIFICATION

(11) **EP 1 272 318 B1**
(45) Date of publication and mention of the grant of the patent: **12.10.2011**
(21) Application number: 01922683.6
(22) Date of filing: 26.03.2001
(51) Int. Cl.: B05D 7/06, B27N 5/00, B27N 3/12, B27N 7/00, B44C 1/175, B62D 1/04

(54) **ENGINEERED WOOD AND METHODS THEREFOR**
VERFAHREN ZUR VERARBEITUNG VON HOLZ UND DAMIT HERGESTELLTE PRODUKTE
BOIS HAUTE TECHNOLOGIE ET PROCEDES CORRESPONDANTS

(30) Priority: 28.03.2000 US 192561 P
(43) Date of publication of application: 08.01.2003
(73) Proprietor: Faurecia Innenraum Systeme GmbH, 76767 Hagenbach (DE)
(72) Inventor: SPICA, Joseph, Novi, MI 48375 (US)
(74) Representative: Richardt Patentanwälte
(86) International application number: PCT/US2001/009627
(87) International publication number: WO 2001/072487

(56) References cited:
- WO-A-00/15357
- DE-A1- 19 824 544
- GB-A- 1 560 647
- US-A- 4 610 900
- US-A- 5 792 302
- US-A- 5 865 116
- US-A- 5 916 502

## Description

### Technical Field

The present invention is directed to printing patterns on substrates and is particularly directed to using a hydrographic process to produce wood fiber substrates having a wood-grain pattern printed thereon.

### Background Of The Invention

The interior passenger compartments of today's high-end vehicles typically have wooden trim and panels. Conventional techniques used to make wooden trim and panels are generally time-consuming and expensive. One technique involves molding a wood veneer layer over a plastic molded part or metal substrate. This technique is very time consuming and expensive because of the slow and labor intensive process of molding, bonding and finishing sheet wood veneer onto complex shaped substrates. Moreover, the rejection rate of parts having a wood veneer is unusually high, which also increases the cost of parts.

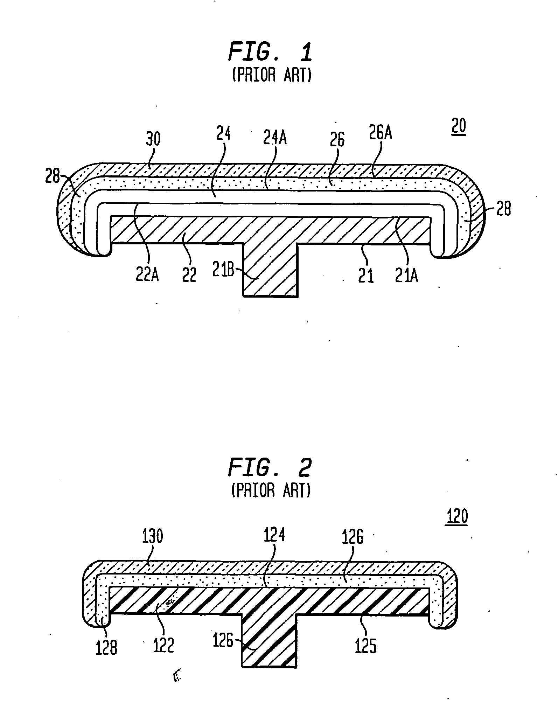

Figure 1 shows a conventional wooden trim part 20 including a metal substrate 21, mounting stud 21B, first and second wood filler layers 22, 24 and face wood veneer 26. The adhesive sheets 21A, 22A and 24A are all formed atop the metal substrate. The wood veneer 26 typically has a thickness of about .30-.50 millimeters. In Figure 1 the thickness of wood veneers has been greatly exaggerated and only layers of wood are shown for purposes of clarity. The number of layers or plies and the use of aluminum layers can vary as required for a specific application. As mentioned above, the process used to mold wood veneer 22, 24 and 26 and the shape of an underlying substrate is extremely labor intensive and expensive. Moreover, the wood veneer 26, and particularly outer peripheral edges 28, may crack as the veneer layer is molded to the shape of the underlying substrate. As a result, installers must typically repair the defects using wood filler compounds, then sand smooth and touch up the veneer with paint to hide the cracks formed during the installation process and to improve the overall appearance of the wooden trim part 20. In spite of these efforts, the rejection rate of parts using wood veneer is unusually high, adding further costs to the production of vehicles. After the wood veneer 26 is molded in place, a transparent protective top coat 30 is applied over the veneer. The protective top coat 30 gives the wooden trim part 20 a glossy appearance and protects the wood veneer 26 from nicks and cuts and is required to meet automotive durability standards. Although wood veneer 26 is expensive and difficult to use, it has one major benefit: it enables car dealers and salesmen to properly state that the part is made with "real wood."

Figure 2 shows another conventional auto part 120 including a plastic or metal substrate 122 having a top surface 124 and securing prong 126 extending from a bottom surface 125. A wood veneer 126 is molded and affixed to the top surface 124 of plastic or metal substrate 122. As described above, the wood veneer 126, and particularly the outer peripheral edges 128 of wood veneer 126, must be molded to conform to the shape of plastic or metal substrate 122. This may result in the formation of cracks in the wood veneer 126 that must be repaired and painted at selected locations to remove imperfections from the veneer. A protective top coat 130 is applied over wood veneer 126 to provide the part 120 with a glossy appearance and to protect the wood veneer 126 from moisture and wear and to meet the automotive standards for durability.

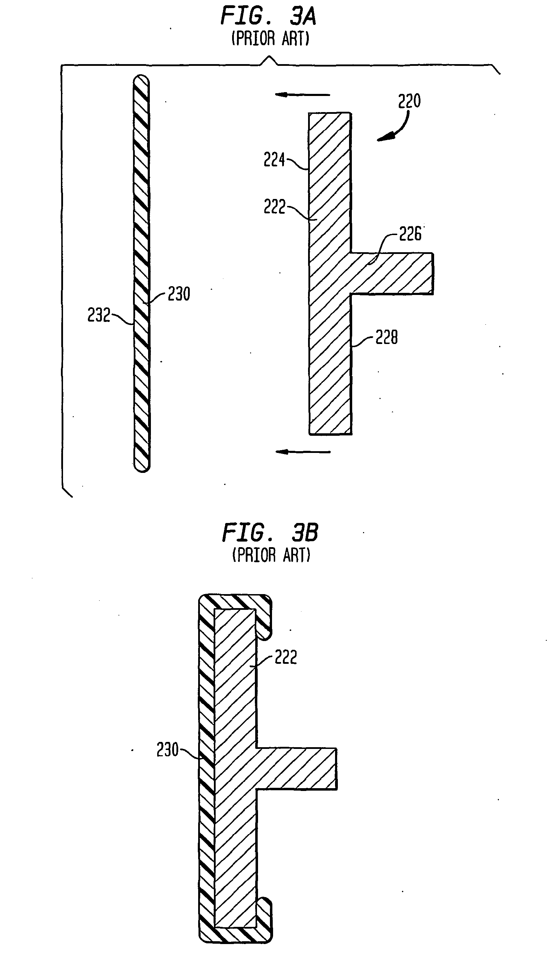

Figures 3A and 3B show yet another conventional design for providing a wood-grain pattern on a substrate that does not require the use of wood veneer. The part 220 includes the substrate 222 made of metal or plastic having a first surface 224 and a mounting projection 226 extending from a second surface 228. A foil layer 230 having a wood-grain pattern printed on a first surface 232 is formed in a tool (not shown) and the formed foil is affixed to closely conform to the shape of the underlying substrate 222. In other conventional methods, the foil is held by a tool and a material forming the substrate is injection molded onto the back of the foil for interconnecting the foil and the supporting substrate. Unlike auto parts that use wood veneer, auto dealers and car salesmen cannot ethically refer to the part 220 as being made of "real wood" because no portion of the part is actually made from wood.

In order to avoid the problems and costs associated with wood veneer, U.S. Patent No. 4,010,057 discloses a hydrographic printing apparatus wherein a liquid soluble film having a pattern (e.g. wood-grain) printed thereon is floated on the surface of a liquid. The pattern is transferred from the liquid soluble film to the surface of a part by pressing the part onto the film and submerging the part into the liquid.

One advantage of the hydrographic printing apparatus disclosed in the '057 patent is that a pattern may be printed directly onto curved and irregular surfaces. However, a part manufactured using the above-described hydrographic process cannot be referred to as a "real wood" part. This fact may discourage potential customers that want their cars to have "real wood" trim and panels.

US-A-5916502 discloses a method of making a wooden part comprising using a hydrographic printing process to transfer a pattern from a liquid soluble film to the outer surface of a wood fiber substrate.

Thus, there is a need for methods for making real wood parts for automobiles.

### Summary Of The Invention

In certain preferred embodiments of the present invention a method of making molded wood parts having a wood-grain pattern thereon includes providing a wood fiber mat made of wood fiber and a heat-activated resin, and molding the wood fiber mat using pressure and heat to form a wood fiber substrate having an outer surface. The molded wood fiber substrate may have any shape, dimension and contour, may have a face wood veneer on the outer surface and may be used for a wide variety of purposes including interior panels, trim, control knobs, shift knobs and steering wheels for passenger vehicles. After the wood fiber mat has been shaped into a molded wood fiber substrate, a water impermeable sealant is applied over the outer surface of the substrate. In one particular embodiment, the step of applying a water-impermeable sealant includes dipping the molded part into a tank holding the water-impermeable sealant. The water-impermeable sealant may also be applied in many other ways, including spraying and brushing the sealant onto the outer surface of the molded wood fiber substrate.

Providing a water-impermeable sealant over the outer surface of the wood fiber substrate is used. If water-impermeable sealant is not used to coat the outer surface of the wood fiber substrate during the hydrographic printing process, moisture may seep into the wood fibers present at the outer surface thereof. The seepage of moisture into the wooden fibers of the wood fiber substrate is highly undesirable, as moisture will have an adverse effect on the condition of the finished outer surface. In particular, the individual wood fibers at the surface will swell upon absorbing moisture. This swelling of the wood fibers will alter the smooth outer surface of the wood fiber substrate, changing the smooth outer surface into a bumpy and/or grainy surface. As is known to those skilled in the art, a smooth surface is highly preferable over a bumpy and/or grainy surface when printing a hydrographic pattern onto an article. The presence of moisture in the wood fibers of the molded part may also reduce the level of adhesion between a transparent protective top coat and the molded wood fiber substrate..

In other preferred embodiments, the wood fiber mat may have the water-impermeable sealant provided therein before the mat is pressed and heated to form the molded wood fiber substrate. During the molding step, the water-impermeable composition, mixed with the wood fibers and the heat-activated resin, travels to the outer surface of the part, whereupon the outer surface is coated with the water-impermeable sealant.

A hydrographic printing process is used to print a wood-grain pattern onto the outer surface of the molded part. In one particular preferred embodiment, a liquid soluble film having a pattern printed thereon is provided adjacent a tank having a liquid, such as water. The liquid soluble film is preferably floated over a top surface of the liquid toward a transfer point. As used herein, the term "transfer point" means the location in the tank at which the design is transferable to the molded wood fiber substrate. Once the pattern on the film has reached the transfer point, the molded wood fiber substrate is abutted against the liquid soluble film floating atop the liquid. The substrate may be immersed into the liquid for more completely transferring the pattern to the outer surface of the molded wood fiber substrate. Preferred hydrographic processes are disclosed in U.S. Patent No. 4,436,571.

During the floating step, the liquid soluble film is fed toward the transfer point atop the liquid. As the film floats on the liquid, the film tends to expand in size and to dissolve. The liquid in the tank preferably moves from an upstream to a downstream end of the tank so as to urge the film toward the transfer point of the tank. The rate at which the liquid soluble film moves toward the transfer point is preferably controlled so that the print on the liquid soluble film is transferable upon reaching the transfer point. In some embodiments, the film is substantially dissolved upon reaching the transfer point. The molded wood fiber substrate is abutted against the liquid soluble film at the transfer point for transferring the pattern on the film to the molded wood fiber substrate. The forward movement of the film toward the transfer point is preferably interrupted at the moment the substrate engages the film so that the pattern on the film is stable at the moment of transfer.

The liquid soluble film is desirably decorated with a range of natural and abstract patterns to decorate complex shaped parts, such as the molded wood fiber substrate disclosed herein. In preferred embodiments, the pattern is a wood-grain pattern, however, the pattern may be of any image or design. As a result, decoration of complex three dimensional parts is possible. In highly preferred embodiments, the pattern printed on the liquid soluble film is a wood-grain pattern made using one or more inks. The liquid for floating the liquid soluble film is desirably water and the liquid soluble film is desirably water soluble.

After the pattern from the liquid soluble film has been transferred to the molded wood fiber substrate, any film residue remaining on the outer surface of the molded wood fiber substrate is removed, such as by washing the substrate with water. A protective top coat, such as a polyester or polyurethane material, is desirably applied over the pattern printed on the outer surface of the part. The protective top coat is preferably transparent, and may have a glossy finish for enhancing the appearance of the pattern printed on the wood fiber substrate.

In another preferred embodiment, a method of making molded wood having a wood-grain pattern printed thereon includes providing a mat comprising wood fiber and a heat-activated resin, and molding the mat using compression and heat to form a molded wood fiber substrate having a substantially smooth outer surface. A water-impermeable sealant is desirably applied over the outer surface of the molded wood fiber substrate. The water-impermeable sealant is preferably selected from the group consisting of latex-based and chemical-based sealants. In certain preferred embodiments, the entire outer surface of the molded wood fiber substrate is covered with the water-impermeable sealant. In other preferred embodiments, the water-impermeable material may be embedded in the wood fiber mat before the molding step. During the molding step, the water-impermeable sealant passes through the individual wood fibers of the mat and toward the outer surface of the mat for providing a water-impermeable layer over the outer surface. A liquid soluble film, preferably having a wood-grain pattern printed thereon, is utilized in a hydrographic process to transfer the pattern from the liquid soluble film to the outer surface of the molded wood fiber substrate. In some embodiments, the molded wood fiber substrate is washed with a liquid before undergoing the hydrographic process, which removes contaminants from the outer surface of the molded wood fiber substrate, thereby enhancing adhesion of the ink from the film to the wood fiber substrate.

### Brief Description Of The Drawings

FIG. 1 shows a cross-sectional view of a prior art mounting including a filler wood layer, a wood face veneer layer, adhesive layers, aluminum layer and a clear top coat.
FIG. 2 shows a cross-sectional view of another prior art mounting including a plastic substrate, a wood veneer layer and a clear top coat.
FIGS. 3A-3B show a method of making still another prior art mounting including a foil having a wood-grain pattern and a mounting part.
FIG. 4 shows a moldable mat including wood fiber and a heat-activated resin.
FIG. 5A shows a cross-sectional view of a die for molding the mat of FIG. 4.
FIG. 5B shows the die of FIG. 5A in a closed position for molding the wood fiber mat of FIG. 4.
FIG. 6 shows a molded wood fiber substrate made by compressing the mat of FIG. 4 using the die of FIGS. 5A-5B.
FIG. 7 shows an enlarged view of the dashed-circle portion of the molded wood fiber substrate of FIG. 6.
FIG. 8 shows a cross-sectional side view of a hydrographic printing system.
FIG. 9 shows a simplified top view of the hydrographic printing system of FIG. 8.
FIG. 10 shows a simplified perspective view of a hydrographic printing process whereby a wood-grain pattern is printed on a molded wood fiber substrate.
FIG. 11 shows a fragmentary cross-sectional view of the molded wood fiber substrate of FIG. 10.
FIG. 12 shows the part of FIG. 11 being washed to remove film residue therefrom.
FIG. 13 shows a drying step that follows the washing step of FIG. 12.
FIG. 14 shows the application of a transparent protective top coat that follows the drying step of FIG. 13.
FIG. 15 shows a cross-sectional view of a molded wood fiber substrate having a pattern printed thereon in accordance with the method according to the present invention.
FIG. 16 shows a cross-sectional view of a molded wood fiber substrate including a veneer layer and a pattern printed thereon in accordance with the method according to the present invention.
FIG. 17 shows a cross-sectional view of a molded wood fiber substrate having a pattern printed on an outer surface thereof in accordance with the method according to the present invention.
FIG. 18 shows a cross-sectional view of a molded wood fiber substrate having a pattern printed on an outer surface thereof in accordance with the method according to the present invention.
FIGS. 19A and 19B show respective exploded and cross-sectional views of a wood steering wheel comprising a pattern printed with the method according to the present invention.
FIGS. 20A and 20B show respective cross-sectional and perspective views of a wood control knob comprising a pattern printed with the method according to the present invention.
FIGS. 21A and 21B show respective cross-sectional and perspective views of a wood stick shift knob comprising a pattern printed with the method according to the present invention.

### Best Mode of Carrying Out Invention

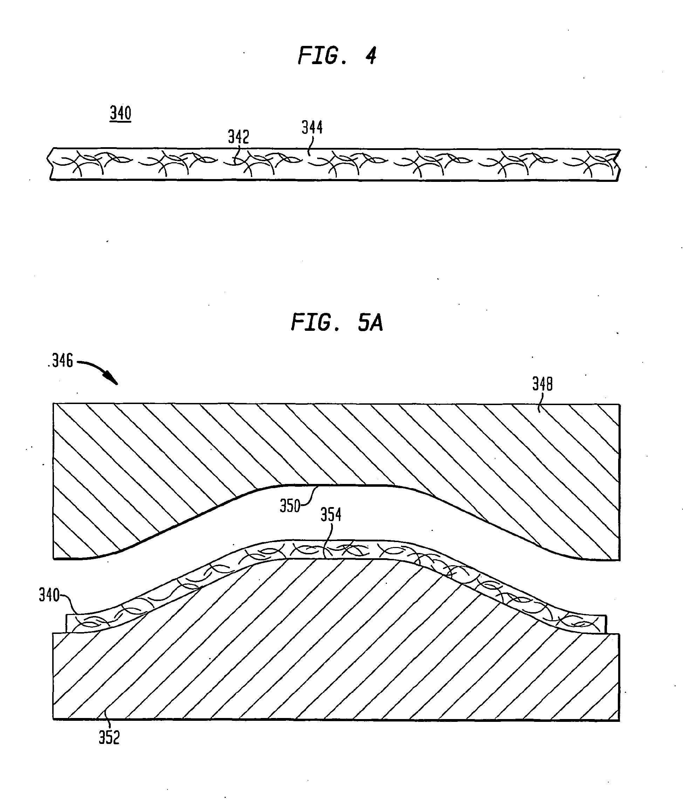

FIG. 4 shows a mat 340 made of wood fiber 342 and a heat-activated resin 344. The heat-activated resin 344 is preferably transformable by pressure and heat during a molding process from a solid state to a liquid state, and then back to a cured solid state. During the molding process, the mat is shaped into a molded wood fiber substrate having an outer surface. After the mat is molded, the cured resin preferably maintains the shape of the molded wood fiber substrate. The outer surface of the molded wood fiber substrate is substantially smooth. The molded wood fiber substrate may be molded into any shape including a substrate having the shape of a control knob, steering wheel, knob attachable to an upper end of a stick shift, curved surface, etc.

FIGS. 5A-5B show a press 346 for shaping the molded parts movable between open and closed positions. Press 346 includes an upper die 348 having a concave face 350 and a lower die 352 having a convex face 354. The specific shape of the faces of the opposing die 348, 352 may be readily modified depending upon the shape desired for the molded wood fiber substrate. The respective concave and convex faces 350, 354 of the opposing die desirably mirror one another so that the press 346 may be utilized to mold a wood fiber substrate when the press is in its closed position. The upper and lower die members 348, 352 may be heatable to a temperature at or above the melting point of the heat-activated resin 344.

Referring to FIG. 5A, in one preferred embodiment, the wood fiber mat 340 is placed atop the convex face 354 of lower die member 352. Before the molding step, the mat 340 may at least partially flex so as to conform to the contour of the convex face 354. As shown in FIG. 5A, wood fiber mat 340 conforms to the shape of the convex face 354 of lower die member 352.

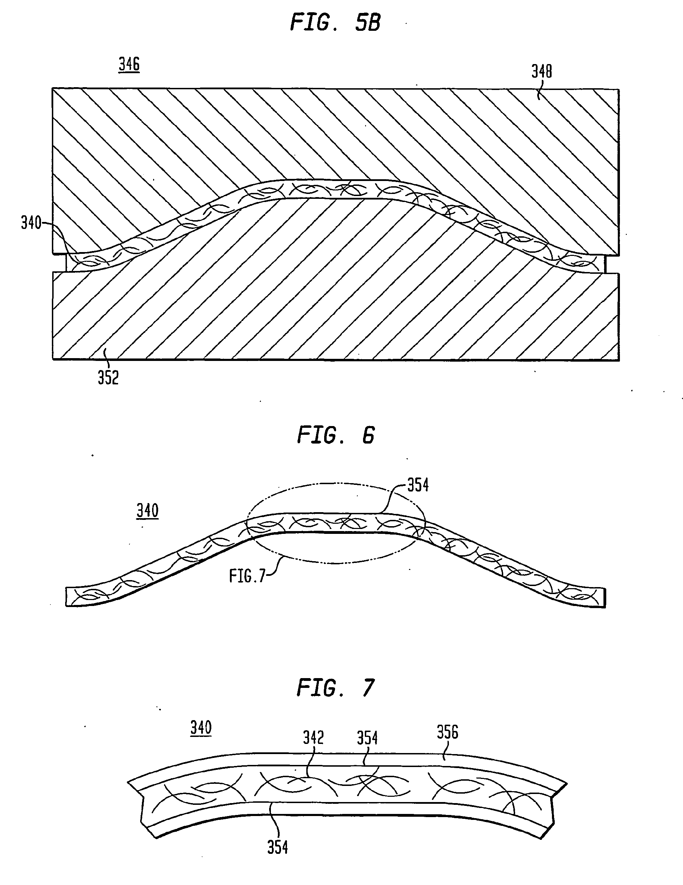

Referring to FIG. 5B, press 346 is closed by moving upper and lower die members 348, 352 toward one another for compressing and heating wood fiber mat 340 therebetween. Pressure and heat are applied until the heat-activated resin in mat 340 is cured for holding the molded shape of the part. The thickness of the mat 340 is preferably reduced during the compressing step. In some embodiments, the wood fiber mat 340 includes a water-impermeable sealant. During the pressing and heating of the mat, the sealant gravitates toward the outer surface of the molded wood fiber substrate for preventing the wood fibers at the outer surface from absorbing moisture and swelling, which has been observed to change the outer surface of a molded wood fiber substrate from a smooth surface to a bumpy or grainy surface.

Referring to FIG. 6, after the molded wood fiber substrate 340 is removed from press 346 (FIG. 5B), the substrate preferably retains its molded shape. This is due, in part, to the curing of the resin during the molding step. As mentioned above, the molded wood fiber substrate 340 desirably has an outer surface 354 that is substantially smooth. Referring to FIG. 7, in order to prevent water or other liquids from being absorbed by the wood fibers 342 at the outer surface 354, a water-impermeable sealant 356 is applied over the outer surface 354. In highly preferred embodiments, the entire outer surface 354 is covered with the water-impermeable sealant 356. Sealant layer 356 may be applied in a number of different ways including brushing or spraying the sealant over the outer surface 354 or dipping all or a portion of the molded wood fiber substrate 340 into a reservoir of sealant material.

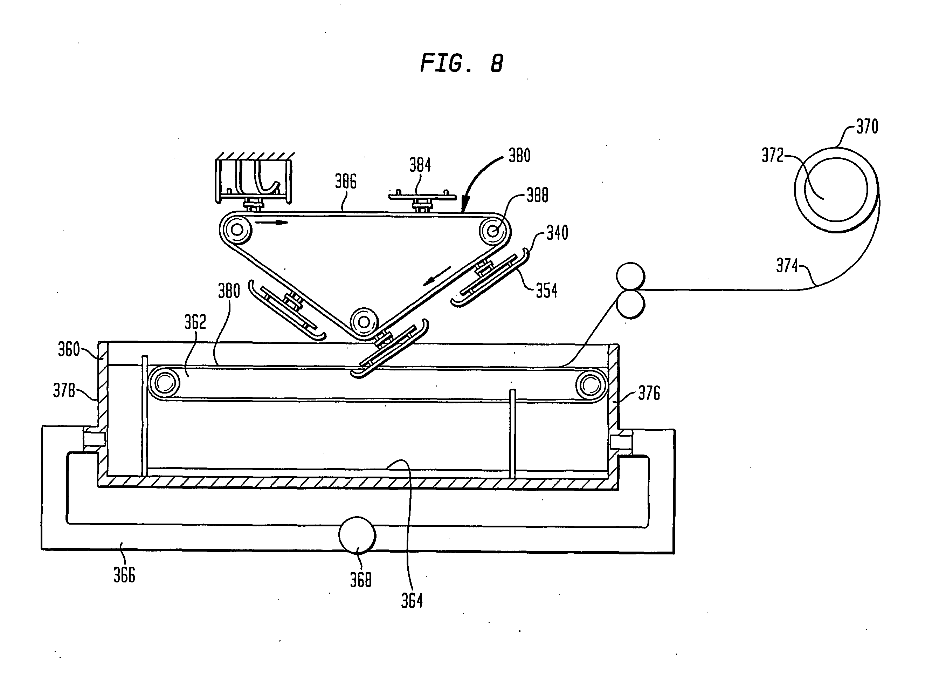

FIG. 8 shows a hydrographics printing system for applying a pattern, such as a wood-grain pattern, to the outer surface 354 of molded wood fiber substrate 340. The hydrographic system includes a tank 360 for holding a liquid 362, such as water, and a heater 364 for maintaining liquid 362 at a desired temperature. The tank 360 may also include a circulation piping system 366 interconnected with a pump 368 for urging the liquid 362 in the tank 360 to flow in a fixed direction. In preferred embodiments, piping system 366 urges liquid 362 to flow from the right side 376 (upstream) to the left side 378 (downstream) of tank 360.

A film supplying assembly 370, such as that disclosed in U.S. Patent 6,103,342, is arranged at the right side 376 of tank 360. Film supplying assembly 370 includes a roll 372 having liquid soluble film 374 wound thereon. Liquid soluble film 374 is preferably an elongated strip made of a material that gradually dissolves after the film contacts the liquid in the tank 360. A design or pattern (not shown) is preferably printed on one side of the liquid soluble film 374.

In operation, the liquid soluble film 374 is fed into tank 360 by film supplying assembly 370, with the printed side of film 372 facing toward the wood fiber substrates 340. The liquid soluble film 374 is floated atop liquid 362, the liquid urging film 374 to move from the right side 376 toward the left side 378 of tank 360. Upon contacting the liquid 362, the liquid soluble film 374 generally expands and dissolves, allowing the ink pattern to float on the liquid. In some embodiments, in order to prevent the edges of the film 374 from becoming wrinkled or curled during expansion of the film, an air blower (not shown) may be provided above the tank 360. The air blower is preferably adapted to apply pressure onto a top surface of film 374. The force of the air blower may be directed toward the left side 378 or downstream side of tank 360.

A wood fiber substrate supplying assembly 380 is provided above tank 360 for moving the molded wood fiber substrates 340 toward tank 360 and immersing the substrates 340 or parts into the liquid 362. The molded wood fiber substrate supplying assembly 380 is adapted to move the substrates along a conveyor path for immersing the substrates 340 in the liquid 362. The substrates 340 are preferably immersed in the liquid 362 as the substrate is moving toward the left side of tank 360. The molded part supplying assembly 380 preferably abuts the molded wood fiber substrate 340 against the pattern printed on the film 374, and immerses all or a portion of the substrate 340 into the liquid 362, while keeping the substrate 340 in contact with the ink pattern. In certain preferred embodiments, the molded wood fiber substrate supplying assembly 380 includes a series of securing elements 384 for securing the substrates 340 on conveyor belt 386. The securing elements 384 are preferably positioned at spaced intervals along the conveyor belt 386. The molded wood fiber substrate supplying assembly may also include one or more pulleys 388 for moving the conveyor belt 386 along its circular path.

By constructing the molded wood fiber substrate supplying assembly 380 as shown in FIG. 8, the substrates 340 are forced to contact the film 374 at a first angle, pivoted into the liquid 362 in the tank 360 and lifted up at a second angle so as to prevent the formation of bubbles or imperfections between the liquid soluble film 374 and the outer surface 354 of the substrate 340. The particular angle at which the wood fiber substrates 340 are passed through the film 374 and liquid 362 may be varied depending upon the specific shape and size of the substrates 340.

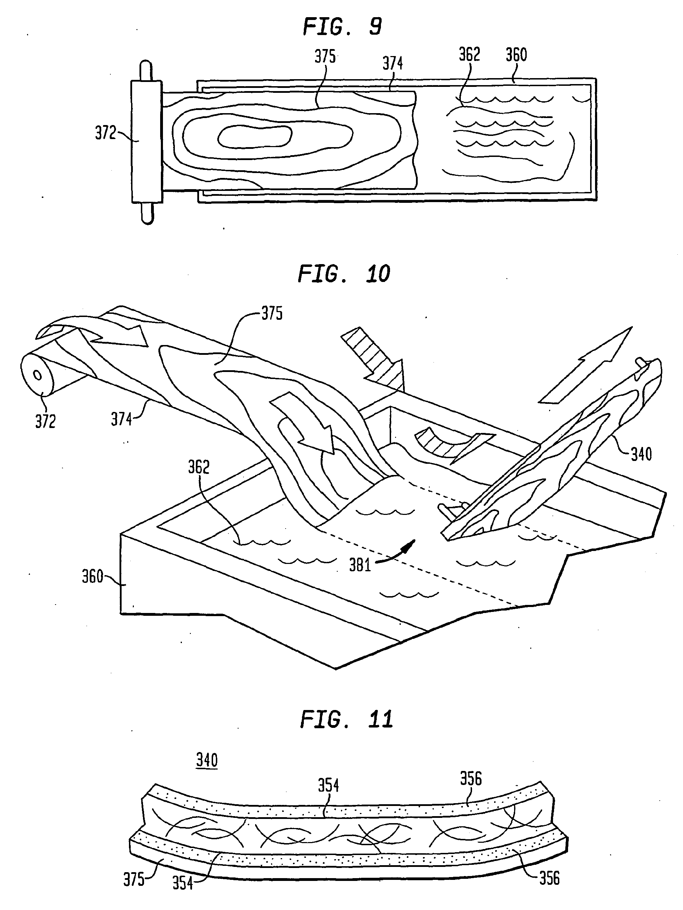

FIGS. 9 and 10 show simplified top and perspective views, respectively, of the hydrographic printing system shown in FIG. 8. Referring to FIGS. 9 and 10, roll 372 includes liquid soluble film 374 having a wood-grain pattern 375 printed on a surface thereof. The liquid soluble film 374 is paid out from roll 372 and floated over the top surface of liquid 362 in tank 360. The molded substrate 340 is preferably abutted against the liquid soluble film at transfer point 381. The timing of the substrate supplying assembly 380, including the rate at which the liquid soluble film 374 is paid out, is coordinated so that the condition of film 374 is optimized for transferring the ink pattern from the film to the substrate 340. In particular preferred embodiments, the liquid soluble film 374 is substantially dissolved at the transfer point 381 so that the pattern on the film may be effectively printed on the molded wood fiber substrate, with preferably only a slight residue of the film remaining on the substrate 340.

FIG. 11 shows molded wood fiber substrate 340 after the wood-grain pattern 375 has been printed thereon. Substrate 340 includes outer surface 354 covered by water-impermeable layer 356, with pattern 375 printed atop water-impermeable layer 356. The pattern is preferably a wood-grain pattern.

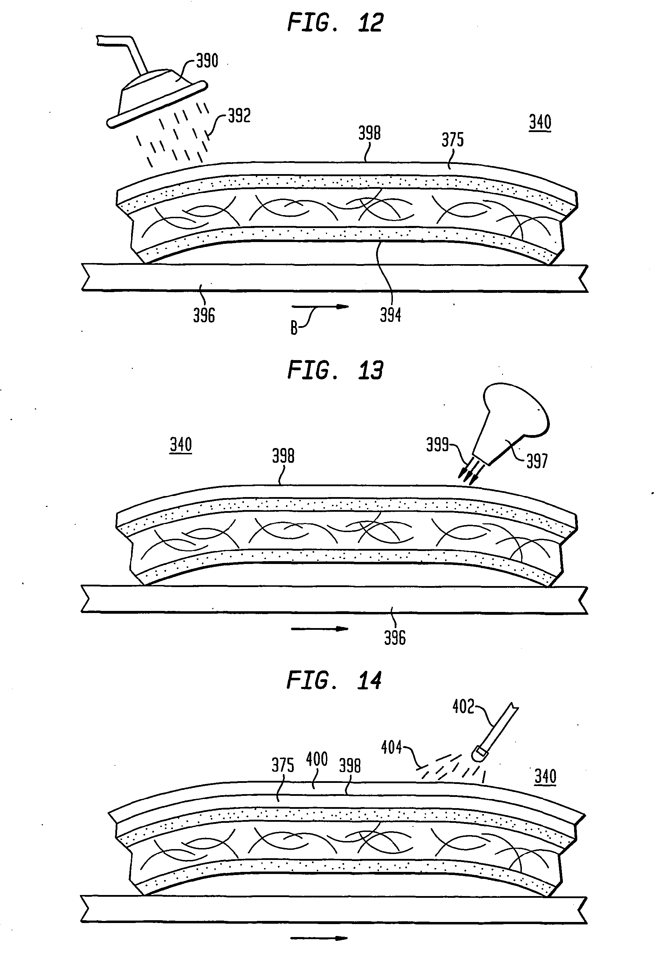

Referring to FIG. 12, the molded wood fiber substrate having the wood-grain pattern printed thereon is subjected to a washing step whereby residue of the film remaining on the substrate 340 is removed or washed away. In the particular embodiment shown in FIG. 12, a showerhead 390 discharges water 392 from removing residue of the film remaining on substrate 340. During the residue removal step, the substrate may be moved along the conveyor 396 in a direction indicated by arrow B. In certain preferred embodiments, an underside 394 of part 340 faces toward conveyor belt 396 and the printed side 398 including wood-grain pattern 375 faces away from conveyor belt 396. Referring to FIG. 13, the substrate 340 may be passed by a dryer 397 adapted to direct a stream of air 398 toward the substrate for drying substrate 340 and the pattern 375 printed thereon.

Referring to FIG. 14, a protective top coat 400 is desirably provided over the wood-grain pattern 375. The protective top coat 400, preferably selected from the group of polymer based materials consisting of polyurethanes and polyesters, protects the pattern 37.5 from nicks or cuts that may mar the aesthetic appearance of the part 340. The protective top coat 400 preferably provides a glossy finish to the substrate 340 and wood-grain pattern. The protective top coat may be applied in many ways, including using a brush or sprayer. The protective top coat is desirably cured, such as by allowing the protective coat to air dry. Protective top coat 400 is preferably transparent so that the pattern 375 transferred to substrate 340 may be seen therethrough. The above-described hydrographic printing process may be applied to a molded wood fiber part having any shape, size or contour. The process is particularly preferred for molded parts having irregular or curved surfaces that are not compatible with wood veneer. As known to those skilled in the art, the use of wood veneer is typically limited to its application over substantially flat surfaces.

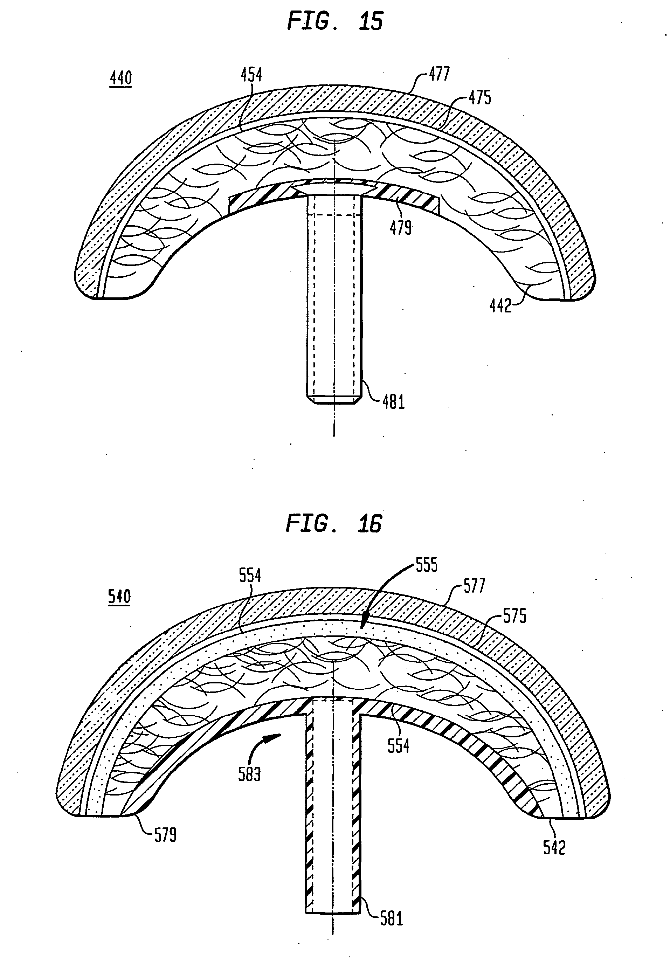

As shown in FIG. 15 a part 440 includes molded wood fiber substrate 442 having a top surface 454 with a hydrographic wood-grain pattern 475 printed thereon. A transparent protective top coat 477 is applied over the wood-grain pattern 475. The protective top coat 477 preferably provides a glossy appearance to the part 440 and protects the wood-grain pattern 475 from nicks, cuts or other aesthetic imperfections. The part 440 may be mounted atop a support plate 479, with a mounting stud 481 secured to support plate 497. The support plate 497 and mounting stud 481 enable part 440 to be secured to a structure, such as inside the passenger compartment of an automobile. Part 440 may have a wood-grain pattern printed thereon so that the part may be used as wood trim or a wood panel within the passenger compartment of a vehicle. The particular pattern 475 printed atop the wood fiber substrate 442 may be modified to have a different appearance. For example, the pattern may being any type of design including stone, marble, brick, etc. Thus, a wide variety of patterns may be printed upon the part 440.

FIG. 16 shows a part 540 which includes molded wood fiber substrate 542 having a top surface 554 and wood veneer 555 molded over top surface 554. A hydrographic printing process is used to print a pattern 575, such as a wood-grain pattern, atop wood veneer 555. A substantially transparent protective top coat 577 is desirably applied over the wood-grain pattern 575. In order to mount the part, the part 540 preferably includes a support 583 comprising plate 579 and mounting stud 581. The support 583 and/or plate 579 may be first molded and then adhered to an underside 554 of molded wood fiber substrate 542. In other embodiments, support 583 may be molded directly onto the underside 554 of molded wood fiber substrate 542.

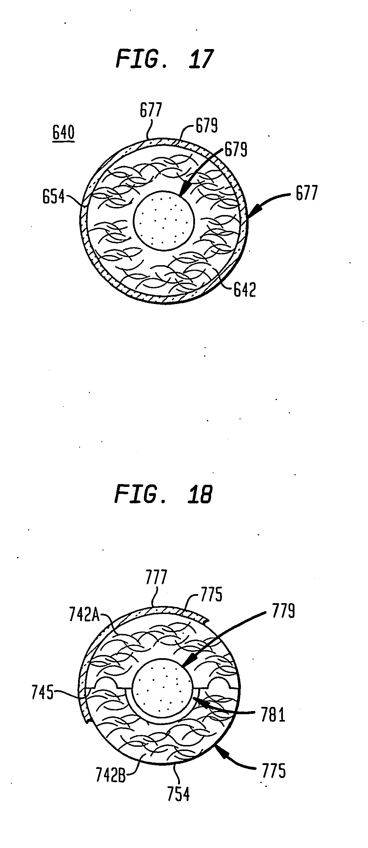

In other preferred embodiments, the above-described methods may be used to form an object having a circular cross section, such as a steering wheel 640 shown in FIG. 17. The steering wheel 640 desirably includes a core 679 having a molded wood fiber substrate 642 formed about the core 679. The core 679 may be made of wood. In one particular preferred embodiment, a mat including wood fiber and a heat-activated adhesive is wrapped around core 679. Compression and heat are applied to the mat to cure the adhesive and form a molded wood fiber substrate 642 having a circular shape. The molded wood fiber substrate 642 is preferably covered with a water-impermeable sealant for preventing the wood fibers at the outer surface of the molded part from swelling or changing shape during the hydrographic printing steps. After water-proofing, substrate 642 is subjected to a hydrographic printing process whereby a pattern 675, such as a wood-grain pattern, is printed onto the outer surface 654 of molded wood fiber substrate 642. A transparent protective top coat 677 is applied over the printed wood-grain pattern 675 for protecting the pattern 675 from nicks and cuts that may mar the aesthetic appearance of the part. In certain preferred embodiments, the part 640 may be used to provide a steering wheel having a wood-grain appearance. The use of molded wood fiber with a wood-grain pattern printed thereon enables auto dealers to claim that the part 640 (e.g., steering wheel) is made of "real wood" because a relatively high percentage of the part is actually made of wood (i.e. wood fiber). Moreover, the method disclosed herein is simpler than prior art methods that mold wood veneer around a central core of a steering wheel. Thus, printing a wood-grain pattern on the steering wheel shaped wood fiber substrate is simpler and more cost efficient than using a wood veneer to provide the wood-grain pattern.

FIG. 18 shows yet another preferred embodiment whereby the molded wood fiber substrate 742 is formed of two parts 742A and 742B. The molded substrates 742A and 742B are preferably formed separate from one another and are later joined together at an interface 745 extending therebetween. In one preferred assembly method, a metal core 779 has first and second molded wood fiber substrates 742A and 742B secured about the core 779. A hydrographic process is used to print a wood-grain pattern 775 over the outer surface 754 of the substrates 742A, 742B. A transparent protective top coat 777 is preferably applied over the wood-grain pattern 775. In alternative embodiments, the wood-grain pattern 775 may be applied over the outer surfaces 754 of the respective first and second molded wood fiber substrates 742A, 742B before the two substrates 742A, 742B are assembled together around metal core 779. A gap 781 may be present between one or more of the molded substrates 742A, 742B and a portion of the metal core 779 to provide a tolerance for the parts of a steering wheel or other component.

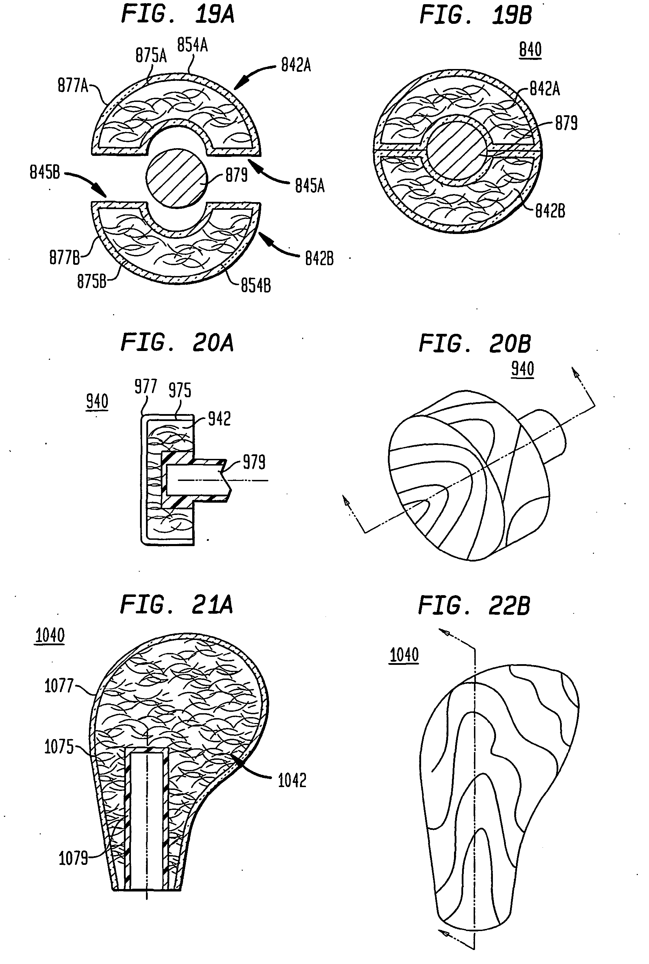

FIGS. 19A and 19B show a wood steering wheel 840 whereby the molded wood fiber substrate is formed as two separate parts 842A, 842B that are assembled together around a metal core 879. The two separate parts 842A, 842B are preferably formed and finished separate from one another and are later joined mechanically together along opposing interfaces 845A, 845B. In one preferred embodiment, metal core 879 has holes (not shown) provided to affix the first and second molded wood fiber substrates 842A and 842B thereto. A hydrographic process is used to print wood-grain patterns 875A, 875B over the outer surfaces 854A, 854B of the respective substrates 842A, 842B. Transparent protective top coats 877A, 877B are preferably applied over the wood-grain patterns 875A, 875B. After the wood-grain patterns 875A, 875B are applied over the outer surfaces 854A, 854B of the respective first and second molded wood fiber substrates 842A, 842B before the two substrates 842A, 842B are assembled together around metal core 879.

FIGS. 20A and 20B show a wood control knob 940, such as a control knob for a radio or a push button for a dashboard, made using one or more of the preferred methods described above. Control knob 940 includes plastic or metal core 979 having a wood fiber substrate 942 affixed thereto. A wood-grain pattern 975 is printed over the wood fiber substrate 942 and a transparent protective top coat 977 in applied over the printed wood-grain pattern 975.

FIGS. 21A and 21B show a wood knob 1040 attachable to an upper end of a stick shift (not shown) made using one or more of the preferred methods described above. Wood stick shift knob 1040 includes plastic or metal core 1079 having a wood fiber substrate 1042 affixed thereto. A wood-grain pattern 1075 is printed over the wood fiber substrate 1042 and a transparent protective top coat 1077 in applied over the printed wood-grain pattern 1075.

### Industrial Applicability

This invention has applicability in the automobile industry.

## Claims

1. A method of making a wooden part comprising:
providing a wood fiber substrate having an outer surface;
applying a water-impermeable sealant over the outer surface of said wood fiber substrate, said sealant forming a watertight seal over the outer surface of said wood fiber substrate, wherein said sealant covers the wood fibers at the outer surface of said wood fiber substrate;
using a hydrographic printing process to transfer a
pattern from a liquid soluble film to the outer surface of said wood fiber substrate,
wherein the provision of the wood fiber substrate comprises providing a mat comprising wood fibers and a heat-activated resin.

2. The method as claimed in claim 1, wherein the provision of the wood fiber substrate comprises:
molding said mat using pressure and heat to form said wood fiber substrate, wherein the water-impermeable sealant over the outer surface of said wood fiber substrate prevents said wood fibers from absorbing moisture.

3. The method as claimed in claim 1 or 2, wherein the hydrographic printing process comprises:
printing the pattern on said liquid soluble film;
floating said liquid soluble film atop a liquid;
feeding said floating liquid soluble film toward a transfer point, wherein said liquid soluble film is at least partially dissolved at the transfer point with said pattern floating atop said liquid;
abutting said wood fiber substrate having the liquid-impermeable sealant over the outer surface thereof against said liquid soluble film so as to transfer said pattern from said liquid-soluble film to said wood fiber substrate.

4. The method as claimed in claim 3, further comprising generating a flow direction over the top surface of said liquid for floating said liquid soluble film toward the transfer point, wherein the liquid soluble film is substantially dissolved upon reaching the transfer point.

5. The method as claimed in claim 4, further comprising at least partially interrupting the feeding of said liquid soluble film toward the transfer point while abutting said wood fiber substrate against said film.

6. The method as claimed in anyone of the claims 1 to 5, wherein said liquid soluble film is an elongated strip.

## Patentansprüche

1. Verfahren zum Herstellen eines Holzteils, umfassend:
Bereitstellen eines Holzfasersubstrats mit einer Außenfläche;
Aufbringen eines wasserundurchlässigen Dichtungsmittels auf der Außenfläche des Holzfasersubstrats, wobei das Dichtungsmittel eine wasserdichte Dichtung auf der Außenfläche des Holzfasersubstrats bildet, wobei das Dichtungsmittel die Holzfasern an der Außenfläche des Holzfasersubstrats bedeckt;
Anwenden eines Wassertransferdruckverfahrens, um ein Muster von einem flüssigkeitslöslichen Film auf die Außenfläche des Holzfasersubstrats zu übertragen,
wobei die Bereitstellung des Holzfasersubstrats das Bereitstellen einer Matte umfasst, die Holzfasern und ein wärmeaktivierbares Harz umfasst.

2. Verfahren nach Anspruch 1, wobei die Bereitstellung des Holzfasersubatrats umfasst:
Formen der Matte unter Anwenden von Druck und Wärme, um das Holzfasersubstrat zu bilden, wobei das wasserundurchlässige Dichtungsmittel auf der Außenfläche des Holzfasersubstrats verhindert, dass die Holzfasern Feuchtigkeit absorbieren.

3. Verfahren nach Anspruch 1 oder 2, wobei das Wassertransferdruckverfahren umfasst:
Drucken des Musters auf den flüssigkeitslöslichen Film;
Schwimmenlassen des flüssigkeitslöslichen Films auf einer Flüssigkeit;
Vorschieben des schwimmenden flüssigkeitslöslichen Films auf eine Übertragungsstelle zu, wobei der flüsslgkeitslösliche Film an der Übertragungsstelle mindestens teilweise aufgelöst ist und das Muster auf der Flüssigkeit schwimmt;
Anlegen des Holzfasersubstrats, welches das flüssigkeitsundurchlässige Dichtungsmittel auf seiner Außenfläche aufweist, an den flüssigkeitslöslichen Film, um so das Muster von dem flüssigkeitslöslichen Film auf das Holzfasersubstrat zu übertragen.

4. Verfahren nach Anspruch 3, welches ferner das Erzeugen einer Fließrichtung an der Oberfläche der Flüssigkeit umfasst, um den flüssigkeitslöslichen Film auf die Übertragungsstelle zuschwimmen zu lassen, wobei der flüssigkeitslösliche Film bei Erreichen der Übertragungsstelle im Wesentlichen aufgelöst ist.

5. Verfahren nach Anspruch 4, welches ferner das mindestens teilweise Unterbrechen des Vorschiebens des flüssigkeitslöslichen Films auf die Übertragungsstelle zu während des Anlegens des Holzfasersubstrats an den Film umfasst.

6. Verfahren nach einem der Ansprüche 1 bis 5, wobei der flüssigkeitslösliche Film ein langgestrecktes Band ist.

## Revendications

1. Procédé de fabrication d'une pièce en bois comprenant :
la fourniture d'un substrat en fibre de bois comportant une surface extérieure ;
l'application d'un agent d'étanchéification imperméable à l'eau sur la surface extérieure dudit substrat en fibre de bois, ledit agent d'étanchéification formant un enduit étanche à l'eau par-dessus la surface extérieure dudit substrat en fibre de bois, ledit agent d'étanchéification recouvrant les fibres de bois au niveau de la surface extérieure dudit substrat en fibre de bois ;
l'utilisation d'un procédé d'impression hydrographique pour transférer un motif d'un film soluble dans des liquides à la surface extérieure dudit substrat en fibre de bois,
dans lequel la fourniture du substrat en fibre de bois comprend la fourniture d'une matte comprenant des fibres de bois et une résine activée par la chaleur.

2. Procédé selon la revendication 1, dans lequel la fourniture du substrat en fibre de bois comprend :
le moulage de ladite matte par utilisation de pression et de chaleur pour former ledit substrat en fibre de bois, l'agent d'étanchéification imperméable à l'eau présent sur la surface extérieure dudit substrat en fibre de bois empêchant lesdites fibres de bois d'absorber l'humidité.

3. Procédé selon la revendication 1 ou 2, dans lequel le procédé d'impression hydrographique comprend :
l'impression du motif sur ledit film soluble dans des liquides ;
le fait de faire flotter ledit film soluble dans des liquides sur le dessus d'un liquide ;
le fait de faire avancer ledit film soluble dans des liquides flottant vers un point de transfert, ledit film soluble dans des liquides étant au moins en partie dissous au point de transfert, ledit motif flottant sur le dessus dudit liquide ;
le fait de positionner ledit substrat en fibre de bois sur la surface extérieure duquel se trouve l'agent d'étanchéification imperméable aux liquides contre ledit film soluble dans des liquides de façon à transférer ledit motif dudit film soluble dans des liquides audit substrat en fibre de bois.

4. Procédé selon la revendication 3, comprenant en outre la production d'un sens d'écoulement sur la surface supérieure dudit liquide pour faire flotter ledit film soluble dans des liquides vers le point de transfert, le film soluble dans des liquides étant substantiellement dissous quand il parvient au point de transfert.

5. Procédé selon la revendication 4, comprenant en outre l'interruption au moins en partie de l'avance dudit film soluble dans des liquides vers le point de transfert durant le positionnement dudit substrat en fibre de bois contre ledit film.

6. Procédé selon l'une quelconque des revendications 1 à 5, dans lequel ledit film soluble dans des liquides est une bande allongée.
